# EUROPEAN PATENT SPECIFICATION

(11) **EP 3 190 762 B1**
(45) Date of publication and mention of the grant of the patent: **16.10.2019**
(21) Application number: 14901209.8
(22) Date of filing: 31.10.2014
(51) Int. Cl.: H04W 12/06, H04W 12/08, H04L 29/06, H04L 9/32, G06F 21/31

(54) **DYNAMIC INSTRUCTION PROCESSING METHOD, DYNAMIC INSTRUCTION PROCESSING APPARATUS, AND TERMINAL**
VERFAHREN ZUR VERARBEITUNG DYNAMISCHER ANWEISUNGEN, VORRICHTUNG ZUR VERARBEITUNG DYNAMISCHER ANWEISUNGEN UND ENDGERÄT
PROCÉDÉ DE TRAITEMENT D'INSTRUCTIONS DYNAMIQUES, APPAREIL DE TRAITEMENT D'INSTRUCTIONS DYNAMIQUES, ET TERMINAL

(30) Priority: 01.09.2014 CN 201410439854
(43) Date of publication of application: 12.07.2017
(73) Proprietor: Yulong Computer Telecommunication Scientific (Shenzhen) Co. Ltd., Shenzhen, Guangdong 518057 (CN)
(72) Inventor: CHEN, Yihuai, Shenzhen Guangdong 518057 (CN); WU, Chiqiang, Shenzhen Guangdong 518057 (CN)
(74) Representative: DREISS Patentanwälte PartG mbB
(86) International application number: PCT/CN2014/090098
(87) International publication number: WO 2016/033861

(56) References cited:
- EP-A1- 2 705 487
- CN-A- 101 060 403
- CN-A- 101 459 513
- CN-A- 102 801 743
- US-A1- 2009 150 678
- US-A1- 2010 242 038
- US-A1- 2012 089 833
- US-A1- 2013 086 299

## Description

### Field of the Invention

The present invention relates to the technical field of terminals, and in particular to a dynamic instruction processing method, a dynamic instruction processing apparatus and a terminal.

### Background of the Invention

With the increasing awareness of information security issues, dynamic tokens are used in more and more occasions, the existing dynamic token generation equipment is generally separate dynamic token equipment, namely, equipment specially used for generating dynamic tokens. In mobile intelligent terminals, dynamic tokens generated by using software are also present. In existing personal mobile office equipment, an office environment is securely accessed via enterprise personal VPN in general.

The above-mentioned technical solution has the following shortcomings:
1. The separate dynamic token equipment is suitable for a variety of scenarios requiring dynamic tokens, but a piece of separate dynamic token equipment must be provided, and if a user forgets to take the separate dynamic token equipment with him/her, corresponding operations cannot be performed.
2. The dynamic tokens generated by using the software in intelligent software environments are not secure and have loopholes (i.e., viruses can steal the dynamic tokens via internal memories and input devices of the terminals).
3. The enterprise office equipment is accessed in the VPN mode, which has certain potential security risks in the aspect of security.

Therefore, a new technical solution is needed to ensure the security of the enterprise office equipment.

US 2009/0150678 A1 discloses a computer and method for sending security information for authentication.

US 2012/0089833 A1 discloses a secure deployment of provable identity for dynamic application environments.

US 2010/0242038 A1 discloses providing a trusted environment for provisioning a virtual machine.

### Summary of the Invention

Just based on the above-mentioned problems, a new technical solution is provided, which can ensure the security of enterprise office equipment.

The invention is defined in the independent claims. Preferred embodiments are defined in the dependent claims.

In view of this, the present invention provides a dynamic instruction processing method used for a terminal. The terminal includes multiple operating systems. The dynamic instruction processing method includes: when a dynamic instruction acquisition request sent by a specified application program in a specified operating system among the multiple operating systems is received, generating a target dynamic instruction; and acquiring the generated target dynamic instruction, and performing a corresponding authentication operation by using the target dynamic instruction.

In the technical solution, when the dynamic instruction acquisition request sent by the specified application program in the specified operating system is received, the dynamic instruction is automatically generated, and the dynamic instruction is automatically acquired to perform the authentication operation, in this case, since the dynamic instruction is automatically generated, manual input by a user is not needed, therefore operations of the user are reduced. In addition, the dynamic instruction is generated only when the acquisition requests from the specified operating system and the specified application program is received, and the dynamic instruction is not generated according to the acquisition requests of all operating systems and all application programs, so that only the allowed operating system and the allowed application program can acquire the dynamic instruction, thereby ensuring the security of the dynamic instruction and preventing the dynamic instruction from being easily stolen.

In the above-mentioned technical solution, preferably, the dynamic instruction processing method further includes: when the specified application program in the specified operating system is enabled and login is carried out through a user identity account, prompting the user of the terminal to input the dynamic instruction to perform authentication on the user of the terminal; and when the terminal is detected to prompt the user to input the dynamic instruction, controlling the specified operating system to send the dynamic instruction acquisition request corresponding to the user identity account of the specified application program.

In the technical solution, when the specified application program is enabled and login is carried out through the user identity account, the user is prompted to input the dynamic instruction, since the dynamic instruction is needed at the moment, the dynamic instruction acquisition request is sent, the terminal generates the dynamic instruction according to the request, the generated dynamic instruction is acquired, authentication is performed through the dynamic instruction, namely the identity of the user is verified, and subsequent operations are allowed after the verification is successful.

In the above-mentioned technical solution, preferably, before the dynamic instruction is generated, the dynamic instruction processing method further includes: when the dynamic instruction acquisition request is received, determining whether the user identity account of the specified application program corresponding to the dynamic instruction acquisition request has the permission to acquire the dynamic instruction; and when the determination result is yes, generating the target dynamic instruction corresponding to the user identity account of the specified application program, and when the determination result is no, not generating the target dynamic instruction.

In the technical solution, before the target dynamic instruction is generated, the user identity account still needs to be authenticated, for example, whether the user identity account corresponds to the terminal and whether the user identity account has permission to operate the terminal are verified so as to determine whether the user identity account has the permission to acquire the dynamic instruction, only when the user identity account has the permission to acquire the dynamic instruction, the dynamic instruction is generated for it, otherwise the dynamic instruction is not generated for it, and thus the security of the dynamic instruction is further ensured.

In the above-mentioned technical solution, preferably, the specified operating system is an operating system having the highest security level among the multiple operating systems, the specified application program includes a personal mobile office application program, and the generation position of the target dynamic instruction is a dynamic instruction generation chip. Preferably, the dynamic instruction generation chip can only be accessed by the operating system having the highest security level among the multiple operating systems, and other systems have no access permission. In the technical solution, the specified operating system can be the system having the highest security level, such as a security system, in this way, the security of the dynamic instruction is ensured greatly, and the dynamic instruction can be prevented from being stolen by viruses or hackers. The specified application program can be the personal mobile office application program, namely the BYOD application program, therefore the operation security of the BYOD application program can be greatly improved by adding a layer of secure dynamic instruction therein.

The dynamic instruction is generated by means of a hardware chip, dependence on the operating system is eliminated, the dynamic instruction is generated and operated in the system of the chip without depending on the time or internal memory of the system, thereby further ensuring the security of the dynamic instruction and preventing hardware attacks.

According to another aspect of the present invention, a dynamic instruction processing apparatus used for a terminal is further provided. The terminal includes multiple operating systems. The dynamic instruction processing apparatus includes: a generation unit used for, when a dynamic instruction acquisition request sent by a specified application program in a specified operating system among the multiple operating systems is received, generating a target dynamic instruction; and an acquisition unit, used for acquiring the generated target dynamic instruction, and performing a corresponding authentication operation by using the target dynamic instruction.

In the technical solution, when the dynamic instruction acquisition request sent by the specified application program in the specified operating system is received, the dynamic instruction is automatically generated, and the dynamic instruction is automatically acquired to perform the authentication operation, in this case, since the dynamic instruction is automatically generated, manual input by a user is not needed, therefore operations of the user are reduced. In addition, the dynamic instruction is generated only when the acquisition requests from the specified operating system and the specified application program is received, and the dynamic instruction is not generated according to the acquisition requests of all operating systems and all application programs, so that only the allowed operating system and the allowed application program can acquire the dynamic instruction, thereby ensuring the security of the dynamic instruction and preventing the dynamic instruction from being easily stolen.

In the above-mentioned technical solution, preferably, the dynamic instruction processing apparatus further includes: a prompting unit used for, when the specified application program in the specified operating system is enabled and login is carried out through a user identity account, prompting the user of the terminal to input the dynamic instruction to perform authentication on the user of the terminal; and a sending unit used for, when the terminal is detected to prompt the user to input the dynamic instruction, controlling the specified operating system to send the dynamic instruction acquisition request corresponding to the user identity account of the specified application program to the generation unit.

In the technical solution, when the specified application program is enabled and login is carried out through the user identity account, the user is prompted to input the dynamic instruction, since the dynamic instruction is needed at the moment, the dynamic instruction acquisition request is sent, the terminal generates the dynamic instruction according to the request, the generated dynamic instruction is acquired, authentication is performed through the dynamic instruction, namely the identity of the user is verified, and subsequent operations are allowed after the verification is successful.

In the above-mentioned technical solution, preferably, the dynamic instruction processing apparatus further includes: a determination unit used for, when the dynamic instruction acquisition request is received, determining whether the user identity account of the specified application program corresponding to the dynamic instruction acquisition request has the permission to acquire the dynamic instruction; and the generation unit is further used for: when the determination result is yes, generating the target dynamic instruction corresponding to the user identity account of the specified application program, and when the determination result is no, not generating the target dynamic instruction.

In the technical solution, before the target dynamic instruction is generated, the user identity account still needs to be authenticated, for example, whether the user identity account corresponds to the terminal and whether the user identity account has permission to operate the terminal are verified so as to determine whether the user identity account has the permission to acquire the dynamic instruction, only when the user identity account has the permission to acquire the dynamic instruction, the dynamic instruction is generated for it, otherwise the dynamic instruction is not generated for it, and thus the security of the dynamic instruction is further ensured.

In the above-mentioned technical solution, preferably, the specified operating system is an operating system having the highest security level among the multiple operating systems, and the specified application program includes a personal mobile office application program.

In the technical solution, the specified operating system can be the system having the highest security level, such as a security system, in this way, the security of the dynamic instruction is ensured greatly, and the dynamic instruction can be prevented from being stolen by viruses or hackers. The specified application program can be the personal mobile office application program, namely the BYOD application program, therefore the operation security of the BYOD application program can be greatly improved by adding a layer of secure dynamic instruction therein.

In the above-mentioned technical solution, preferably, the generation unit includes a dynamic instruction generation chip. Preferably, the dynamic instruction generation chip can only be accessed by the operating system having the highest security level among the multiple operating systems, and other systems have no access permission. In the technical solution, the dynamic instruction is generated by means of a hardware chip, dependence on the operating system is eliminated, the dynamic instruction is generated and operated in the system of the chip without depending on the time or internal memory of the system, thereby further ensuring the security of the dynamic instruction and preventing hardware attacks.

According to yet another aspect of the present invention, a terminal is further provided, including: multiple operating systems; and the dynamic instruction processing apparatus in any one of the above-mentioned technical solutions. The terminal has the same technical effects as the above-mentioned dynamic instruction processing apparatus, and thus will not be repeated redundantly herein.

By means of the above-mentioned technical solutions, the hardware chip capable of generating a dynamic instruction is arranged in the multi-system terminal, and only the specified secure operating system is allowed to acquire a dynamic instruction from the hardware chip, so that the security of the dynamic instruction is ensured; in addition, the dynamic instruction can be automatically acquired, manual input by the user is not needed, therefore operations of the user are reduced, and the technical effects of security and convenience are achieved.

### Brief Description of the Drawings

Fig. 1 shows a flowchart of a dynamic instruction processing method according to an embodiment of the present invention;
Fig. 2 shows a block diagram of a dynamic instruction processing apparatus according to an embodiment of the present invention;
Fig. 3 shows a structure diagram of a terminal according to an embodiment of the present invention;
Fig. 4 shows a schematic diagram of specific operations of a dynamic instruction processing method according to an embodiment of the present invention.

### Detailed Description of the Embodiments

In order that above-mentioned objectives, features and advantages of the present invention can be understood more clearly, a further detailed description of the present invention will be given below in combination with accompanying drawings and specific embodiments. It should be noted that embodiments of the present application and features in the embodiments can be combined with one another without conflict. Many specific details are set forth in the following description so as to fully understand the present invention, but the present invention can also be implemented in other ways different from those described herein, and thus the protection scope of the present invention is not limited to the specific embodiments disclosed below.

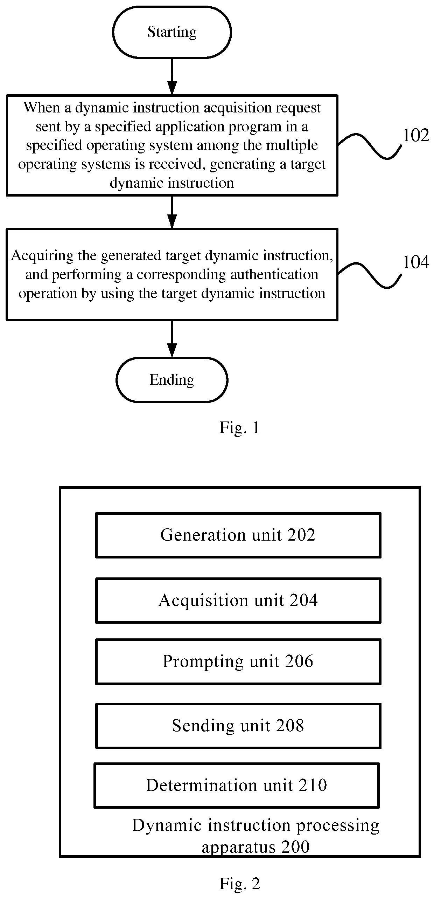

Fig. 1 shows a flowchart of a dynamic instruction processing method according to an embodiment of the present invention.

As shown in Fig. 1, the dynamic instruction processing method according to the embodiment of the present invention includes: step 102, when a dynamic instruction acquisition request sent by a specified application program in a specified operating system among the multiple operating systems is received, generating a target dynamic instruction; and step 104, acquiring the generated target dynamic instruction, and performing a corresponding authentication operation by using the target dynamic instruction.

In the technical solution, when the dynamic instruction acquisition request sent by the specified application program in the specified operating system is received, the dynamic instruction is automatically generated, and the dynamic instruction is automatically acquired to perform the authentication operation, in this case, since the dynamic instruction is automatically generated, manual input by a user is not needed, therefore operations of the user are reduced. In addition, the dynamic instruction is generated only when the acquisition requests from the specified operating system and the specified application program is received, and the dynamic instruction is not generated according to the acquisition requests of all operating systems and all application programs, so that only the allowed operating system and the allowed application program can acquire the dynamic instruction, thereby ensuring the security of the dynamic instruction and preventing the dynamic instruction from being easily stolen.

In the above-mentioned technical solution, preferably, the dynamic instruction processing method further includes: when the specified application program in the specified operating system is enabled and login is carried out through a user identity account, prompting the user of the terminal to input the dynamic instruction to perform authentication on the user of the terminal; and when the terminal is detected to prompt the user to input the dynamic instruction, controlling the specified operating system to send the dynamic instruction acquisition request corresponding to the user identity account of the specified application program.

In the technical solution, when the specified application program is enabled and login is carried out through the user identity account, the user is prompted to input the dynamic instruction, since the dynamic instruction is needed at the moment, the dynamic instruction acquisition request is sent, the terminal generates the dynamic instruction according to the request, the generated dynamic instruction is acquired, authentication is performed through the dynamic instruction, namely the identity of the user is verified, and subsequent operations are allowed after the verification is successful.

In the above-mentioned technical solution, preferably, before the dynamic instruction is generated, the dynamic instruction processing method further includes: when the dynamic instruction acquisition request is received, determining whether the user identity account of the specified application program corresponding to the dynamic instruction acquisition request has the permission to acquire the dynamic instruction; and when the determination result is yes, generating the target dynamic instruction corresponding to the user identity account of the specified application program, and when the determination result is no, not generating the target dynamic instruction.

In the technical solution, before the target dynamic instruction is generated, the user identity account still needs to be authenticated, for example, whether the user identity account corresponds to the terminal and whether the user identity account has permission to operate the terminal are verified so as to determine whether the user identity account has the permission to acquire the dynamic instruction, only when the user identity account has the permission to acquire the dynamic instruction, the dynamic instruction is generated for it, otherwise the dynamic instruction is not generated for it, and thus the security of the dynamic instruction is further ensured.

In the above-mentioned technical solution, preferably, the specified operating system is an operating system having the highest security level among the multiple operating systems, the specified application program includes a personal mobile office application program, and the generation position of the target dynamic instruction is a dynamic instruction generation chip. Preferably, the dynamic instruction generation chip can only be accessed by the operating system having the highest security level among the multiple operating systems, and other systems have no access permission. In the technical solution, the specified operating system can be the system having the highest security level, such as a security system, in this way, the security of the dynamic instruction is ensured greatly, and the dynamic instruction can be prevented from being stolen by viruses or hackers. The specified application program can be the personal mobile office application program, namely the BYOD application program, therefore the operation security of the BYOD application program can be greatly improved by adding a layer of secure dynamic instruction therein.

The dynamic instruction is generated by means of a hardware chip, dependence on the operating system is eliminated, the dynamic instruction is generated and operated in the system of the chip without depending on the time or internal memory of the system, thereby further ensuring the security of the dynamic instruction and preventing hardware attacks.

Fig. 2 shows a block diagram of a dynamic instruction processing apparatus according to an embodiment of the present invention.

As shown in Fig. 2, the dynamic instruction processing apparatus 200 according to the embodiment of the present invention includes: a generation unit 202 used for, when a dynamic instruction acquisition request sent by a specified application program in a specified operating system among the multiple operating systems is received, generating a target dynamic instruction; and an acquisition unit 204, used for acquiring the generated target dynamic instruction, and performing a corresponding authentication operation by using the target dynamic instruction.

In the technical solution, when the dynamic instruction acquisition request sent by the specified application program in the specified operating system is received, the dynamic instruction is automatically generated, and the dynamic instruction is automatically acquired to perform the authentication operation, in this case, since the dynamic instruction is automatically generated, manual input by a user is not needed, therefore operations of the user are reduced. In addition, the dynamic instruction is generated only when the acquisition requests from the specified operating system and the specified application program is received, and the dynamic instruction is not generated according to the acquisition requests of all operating systems and all application programs, so that only the allowed operating system and the allowed application program can acquire the dynamic instruction, thereby ensuring the security of the dynamic instruction and preventing the dynamic instruction from being easily stolen.

In the above-mentioned technical solution, preferably, the dynamic instruction processing apparatus further includes: a prompting unit 206 used for, when the specified application program in the specified operating system is enabled and login is carried out through a user identity account, prompting the user of the terminal to input the dynamic instruction to perform authentication on the user of the terminal; and a sending unit 208 used for, when the terminal is detected to prompt the user to input the dynamic instruction, controlling the specified operating system to send the dynamic instruction acquisition request corresponding to the user identity account of the specified application program to the generation unit 202.

In the technical solution, when the specified application program is enabled and login is carried out through the user identity account, the user is prompted to input the dynamic instruction, since the dynamic instruction is needed at the moment, the dynamic instruction acquisition request is sent, the terminal generates the dynamic instruction according to the request, the generated dynamic instruction is acquired, authentication is performed through the dynamic instruction, namely the identity of the user is verified, and subsequent operations are allowed after the verification is successful.

In the above-mentioned technical solution, preferably, the dynamic instruction processing apparatus further includes: a determination unit 210 used for, when the dynamic instruction acquisition request is received, determining whether the user identity account of the specified application program corresponding to the dynamic instruction acquisition request has the permission to acquire the dynamic instruction; and the generation unit 202 is further used for: when the determination result is yes, generating the target dynamic instruction corresponding to the user identity account of the specified application program, and when the determination result is no, not generating the target dynamic instruction.

In the technical solution, before the target dynamic instruction is generated, the user identity account still needs to be authenticated, for example, whether the user identity account corresponds to the terminal and whether the user identity account has permission to operate the terminal are verified so as to determine whether the user identity account has the permission to acquire the dynamic instruction, only when the user identity account has the permission to acquire the dynamic instruction, the dynamic instruction is generated for it, otherwise the dynamic instruction is not generated for it, and thus the security of the dynamic instruction is further ensured.

In the above-mentioned technical solution, preferably, the specified operating system is an operating system having the highest security level among the multiple operating systems, and the specified application program includes a personal mobile office application program.

In the technical solution, the specified operating system can be the system having the highest security level, such as a security system, in this way, the security of the dynamic instruction is ensured greatly, and the dynamic instruction can be prevented from being stolen by viruses or hackers. The specified application program can be the personal mobile office application program, namely the BYOD application program, therefore the operation security of the BYOD application program can be greatly improved by adding a layer of secure dynamic instruction therein.

In the above-mentioned technical solution, preferably, the generation unit 202 includes a dynamic instruction generation chip. Preferably, the dynamic instruction generation chip can only be accessed by the operating system having the highest security level among the multiple operating systems, and other systems have no access permission.

In the technical solution, the dynamic instruction is generated by means of a hardware chip, dependence on the operating system is eliminated, the dynamic instruction is generated and operated in the system of the chip without depending on the time or internal memory of the system, thereby further ensuring the security of the dynamic instruction and preventing hardware attacks.

The technical solutions of the present invention will be illustrated below in detail by using an example that the terminal is a terminal having double operating systems, the specified operating system is the security system, and the specified application program is the BYOD application program.

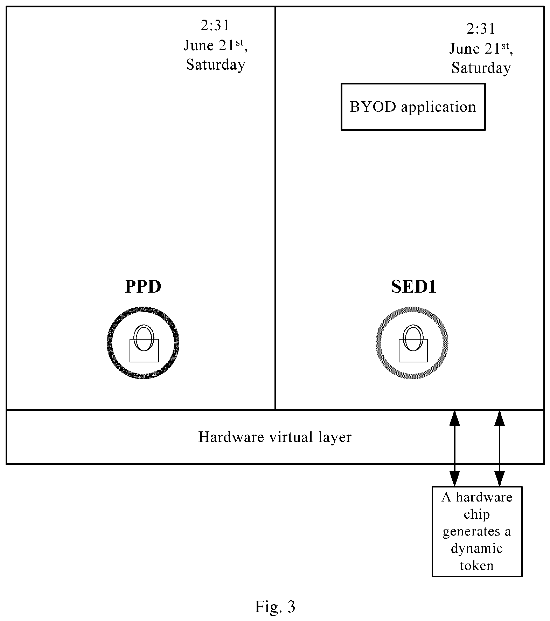

Fig. 3 shows a structure diagram of a terminal according to an embodiment of the present invention.

As shown in Fig. 3, the terminal includes an ordinary operating system PPD302 and a secure operating system SED1304, wherein the BYOD application is mainly present in the secure operating system, in this case, when the user wants to access enterprise office equipment, the user needs to input a dynamic token (i.e., the dynamic instruction). In the security system, it can guarantee the dynamic token is not stolen. The dynamic token is generated by a hardware chip 306, and since the dynamic token is generated by the hardware chip 306, it can guarantee the dynamic token is prevented from being acquired by hardware attack. After the dynamic token is generated, the terminal automatically acquires it, and manual input by the user is not needed, therefore the operations of the user are reduced. Specifically, the dynamic token can be directly acquired by the application program by accessing the hardware chip via a specific interface.

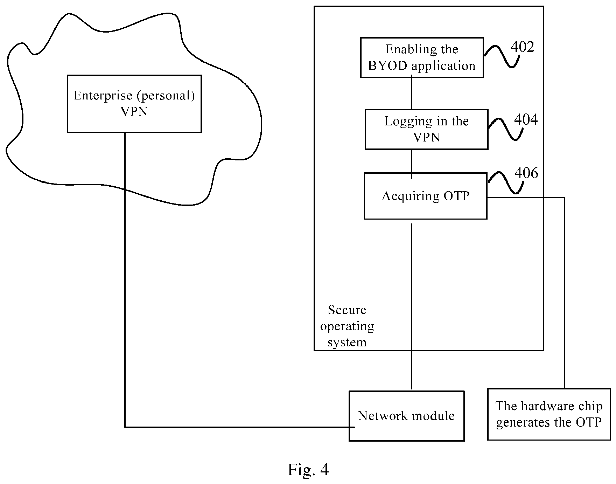

Fig. 4 shows a schematic diagram of specific operations of a dynamic instruction processing method according to an embodiment of the present invention.

As shown in Fig. 4, the specific operations of the dynamic instruction processing method according to an embodiment of the present invention include:
Step 402, a terminal receives an instruction of enabling a BYOD application in a secure operating system input by a user in a security system;
step 404, the user is prompted to login a VPN to access an enterprise network; and step 406, in order to ensure the security, the enterprise network requires the user to input a dynamic token, if a submission command selected by the user on an application interface is received at the moment, a hardware chip interface is automatically called to acquire and input the dynamic token generated by the hardware chip for verification, and the user is allowed to start enterprise work at the terminal if the verification is successful.

The technical solutions of the present invention have been described above in detail in combination with the accompany drawings. By means of the technical solutions of the present invention, the hardware chip capable of generating a dynamic instruction is arranged in the multi-system terminal, and only the specified secure operating system is allowed to acquire a dynamic instruction from the hardware chip, so that the security of the dynamic instruction is ensured; in addition, the dynamic instruction can be automatically acquired, manual input by the user is not needed, therefore operations of the user are reduced, and the technical effects of security and convenience are achieved.

Described above are merely preferred embodiments of the present invention, which are not intended to limit the present invention. The present invention can have a variety of modifications and variations for those skilled in the art. All modifications, equivalent substitutions, improvements and the like made within the spirit and principle of the present invention shall fall within the protection scope of the present invention.

## Claims

1. A dynamic instruction processing method performed by a dynamic instruction processing apparatus and used for a terminal, wherein the terminal comprises multiple operating systems, and the dynamic instruction processing method comprises:
when a dynamic instruction acquisition request sent by a specified application program in a specified operating system among the multiple operating systems is received, generating a target dynamic instruction (102); and
acquiring the generated target dynamic instruction, and performing a corresponding authentication operation by using the target dynamic instruction (104),
further comprising:
when the specified application program in the specified operating system is enabled and login is carried out through a user identity account, prompting the user of the terminal to input the dynamic instruction to perform the corresponding authentication operation, the corresponding authentication operation being authentication of the user of the terminal; and
when the terminal is detected to prompt the user to input the dynamic instruction, controlling the specified operating system to send the dynamic instruction acquisition request corresponding to the user identity account of the specified application program, **characterized in that**
before the dynamic instruction is generated, the dynamic instruction processing method further comprises:
when the dynamic instruction acquisition request is received, determining whether the user identity account of the specified application program corresponding to the dynamic instruction acquisition request has the permission to acquire the dynamic instruction; and
when the determination result is yes, generating the target dynamic instruction corresponding to the user identity account of the specified application program, and when the determination result is no, not generating the target dynamic instruction.

2. The dynamic instruction processing method of any one of claim 1, wherein the specified operating system is an operating system having the highest security level among the multiple operating systems, the specified application program comprises a personal mobile office application program, wherein a generation unit in the dynamic instruction processing apparatus generates the target dynamic instruction and includes a dynamic instruction generation chip, and the dynamic instruction generation chip can only be accessed by the operating system having the highest security level among the multiple operating systems.

3. A dynamic instruction processing apparatus (200) used for a terminal, wherein the terminal comprises multiple operating systems, and the dynamic instruction processing apparatus (200) comprises:
a generation unit (202) used for, when a dynamic instruction acquisition request sent by a specified application program in a specified operating system among the multiple operating systems is received, generating a target dynamic instruction; and
an acquisition unit (204), used for acquiring the generated target dynamic instruction, and performing a corresponding authentication operation by using the target dynamic instruction,
further comprising:
a prompting unit (206) used for, when the specified application program in the specified operating system is enabled and login is carried out through a user identity account, prompting the user of the terminal to input the dynamic instruction to perform the corresponding authentication operation, the corresponding authentication operation being authentication of the user of the terminal; and
a sending unit (208) used for, when the terminal is detected to prompt the user to input the dynamic instruction, controlling the specified operating system to send the dynamic instruction acquisition request corresponding to the user identity account of the specified application program to the generation unit (202), **characterized in** the dynamic instruction processing apparatus (200) further comprising:
a determination unit (210) used for, when the dynamic instruction acquisition request is received, determining whether the user identity account of the specified application program corresponding to the dynamic instruction acquisition request has the permission to acquire the dynamic instruction; and
the generation unit (202) is further used for:
when the determination result is yes, generating the target dynamic instruction corresponding to the user identity account of the specified application program, and
when the determination result is no, not generating the target dynamic instruction.

4. The dynamic instruction processing apparatus (200) of claim 3, wherein the generation unit (202) comprises a dynamic instruction generation chip, and the dynamic instruction generation chip can only be accessed by the operating system having the highest security level among the multiple operating systems.

5. A terminal, comprising:
multiple operating systems; and
the dynamic instruction processing apparatus (200) of any one of claims 3 - 4.

6. The terminal of claim 5, wherein the specified operating system is an operating system having the highest security level among the multiple operating systems, and the specified application program comprises a personal mobile office application program.

## Patentansprüche

1. Verfahren zur Verarbeitung dynamischer Anweisungen, das von einer Vorrichtung zur Verarbeitung dynamischer Anweisungen ausgeführt und für ein Endgerät verwendet wird, wobei das Endgerät eine Vielzahl von Betriebssystemen umfasst und das Verfahren zur Verarbeitung dynamischer Anweisungen Folgendes umfasst:
wenn eine Anforderung zur Erfassung dynamischer Anweisungen empfangen wird, die von einem spezifizierten Anwendungsprogramm in einem von der Vielzahl von Betriebssystemen spezifizierten Betriebssystem gesendet worden ist, Erzeugen einer dynamischen Zielanweisung (102); und
Erfassen der erzeugten dynamischen Zielanweisung und Ausführen eines entsprechenden Authentifizierungsprozesses mithilfe der dynamischen Zielanweisung (104);
zudem umfassend:
wenn das spezifizierte Anwendungsprogramm in dem spezifizierten Betriebssystem aktiviert und die Anmeldung mittels eines Benutzer-ID-Kontos ausgeführt worden ist, Auffordern des Benutzers des Endgerätes zur Eingabe der dynamischen Anweisung, um den entsprechenden Authentifizierungsvorgang auszuführen, wobei der entsprechende Authentifizierungsvorgang die Authentifizierung des Benutzers des Endgerätes ist; und
wenn das Endgerät erkannt worden ist, um den Benutzer zur Eingabe der dynamischen Anweisung aufzufordern, Steuern des spezifizierten Betriebssystems, um die Anforderung zur Erfassung dynamischer Anweisungen entsprechend dem Benutzer-ID-Konto des spezifizierten Anwendungsprogramms zu senden, **dadurch gekennzeichnet, dass** das Verfahren zur Verarbeitung dynamischer Anweisungen vor der Erzeugung der dynamischen Anweisung zudem Folgendes umfasst:
wenn die Anforderung zur Erfassung dynamischer Anweisungen empfangen worden ist, Ermitteln, ob das der Anforderung zur Erfassung dynamischer Anweisungen entsprechende Benutzer-ID-Konto des spezifizierten Anwendungsprogramms die Berechtigung hat, die dynamische Anweisung zu erfassen; und
wenn das Ermittlungsergebnis positiv ist, Erzeugen der dynamischen Zielanweisung entsprechend dem Benutzer-ID-Konto des spezifizierten Anwendungsprogramms, und wenn das Ermittlungsergebnis negativ ist, Nichterzeugen der dynamischen Zielanweisung.

2. Verfahren zur Verarbeitung dynamischer Anweisungen nach Anspruch 1, wobei das spezifizierte Betriebssystem ein Betriebssystem ist, das von der Vielzahl von Betriebssystemen die höchste Sicherheitsstufe aufweist und das spezifizierte Anwendungsprogramm ein persönliches mobiles Office-Anwendungsprogramm umfasst, wobei eine Erzeugungseinheit der Vorrichtung zur Verarbeitung dynamischer Anweisungen die dynamische Zielanweisung erzeugt und einen Chip zur Erzeugung dynamischer Anweisungen umfasst, wobei nur das Betriebssystem, das von der Vielzahl von Betriebssystemen die höchste Sicherheitsstufe aufweist, auf den Chip zur Erzeugung dynamischer Anweisungen zugreifen kann.

3. Vorrichtung zur Verarbeitung dynamischer Anweisungen (200), das für ein Endgerät verwendet wird, wobei das Endgerät eine Vielzahl von Betriebssystemen umfasst und die Vorrichtung zur Verarbeitung dynamischer Anweisungen (200) Folgendes umfasst:
eine Erzeugungseinheit (202), die - wenn eine Anforderung zur Erfassung dynamischer Anweisungen empfangen wird, die von einem spezifizierten Anwendungsprogramm in einem von der Vielzahl von Betriebssystemen spezifizierten Betriebssystem gesendet worden ist - dazu dient, eine dynamische Zielanweisung zu erzeugen; und
eine Erfassungseinheit (204), die dazu dient, die erzeugte dynamische Zielanweisung zu erfassen und einen entsprechenden Authentifizierungsprozess mithilfe der dynamischen Zielanweisung auszuführen;
zudem umfassend:
eine Aufforderungseinheit (206), die - wenn das spezifizierte Anwendungsprogramm in dem spezifizierten Betriebssystem aktiviert und die Anmeldung mittels eines Benutzer-ID-Kontos ausgeführt worden ist - dazu dient, den Benutzer des Endgerätes zur Eingabe der dynamischen Anweisung aufzufordern, um den entsprechenden Authentifizierungsvorgang auszuführen, wobei der entsprechende Authentifizierungsvorgang die Authentifizierung des Benutzers des Endgerätes ist; und
eine Sendeeinheit (208), die - wenn das Endgerät erkannt worden ist, um den Benutzer zur Eingabe der dynamischen Anweisung aufzufordern - dazu dient, das spezifizierte Betriebssystem zu steuern, um die Anforderung zur Erfassung dynamischer Anweisungen entsprechend dem Benutzer-ID-Konto des spezifizierten Anwendungsprogramms an die Erzeugungseinheit (202) zu senden, **dadurch gekennzeichnet, dass** die Vorrichtung zur Verarbeitung dynamischer Anweisungen (200) zudem Folgendes umfasst:
eine Ermittlungseinheit (210), die - wenn die Anforderung zur Erfassung dynamischer Anweisungen empfangen wird - dazu dient, zu ermitteln, ob das der Anforderung zur Erfassung dynamischer Anweisungen entsprechende Benutzer-ID-Konto des spezifizierten Anwendungsprogramms die Berechtigung hat, die dynamische Anweisung zu erfassen;
wobei die Erzeugungseinheit (202) zudem dazu dient:
wenn das Ermittlungsergebnis positiv ist, Erzeugen der dynamischen Zielanweisung entsprechend dem Benutzer-ID-Konto des spezifizierten Anwendungsprogramms, und wenn das Ermittlungsergebnis negativ ist, Nichterzeugen der dynamischen Zielanweisung.

4. Vorrichtung zur Verarbeitung dynamischer Anweisungen (200) nach Anspruch 3, wobei die Erzeugungseinheit (202) einen Chip zur Erzeugung dynamischer Anweisungen umfasst und nur das Betriebssystem, das von der Vielzahl von Betriebssystemen die höchste Sicherheitsstufe aufweist, auf den Chip zur Erzeugung dynamischer Anweisungen zugreifen kann.

5. Ein Endgerät, umfassend:
eine Vielzahl von Betriebssystemen und
die Vorrichtung zur Verarbeitung dynamischer Anweisungen (200) nach einem der Ansprüche 3 - 4.

6. Endgerät nach Anspruch 5, wobei das spezifizierte Betriebssystem ein Betriebssystem ist, das von der Vielzahl von Betriebssystemen die höchste Sicherheitsstufe aufweist, und das spezifizierte Anwendungsprogramm ein persönliches mobiles Office-Anwendungsprogramm umfasst.

## Revendications

1. Procédé de traitement d'instructions dynamiques réalisé par un appareil de traitement d'instructions dynamiques et utilisé pour un terminal, dans lequel le terminal comprend des systèmes d'exploitation multiples, et dans lequel le procédé de traitement d'instructions dynamiques comprend:
lorsqu'une demande d'acquisition d'instructions dynamiques envoyée par un programme d'application spécifié dans un système d'exploitation spécifié parmi les systèmes d'exploitation multiples est reçue, la génération d'une instruction dynamique cible (102); et
l'acquisition de l'instruction dynamique cible générée, et la réalisation d'une opération d'authentification correspondante en utilisant l'instruction dynamique cible (104),
comprenant, en outre:
lorsque le programme d'application spécifié dans le système d'exploitation spécifié est activé et que la connexion est réalisée par un compte d'identité utilisateur, l'invite de l'utilisateur du terminal à entrer l'instruction dynamique pour réaliser l'opération d'authentification correspondante, l'opération d'authentification correspondante étant une authentification de l'utilisateur du terminal; et lorsque le terminal est détecté pour inviter l'utilisateur à entrer l'instruction dynamique, le contrôle du système d'exploitation spécifié pour envoyer la demande d'acquisition des instructions dynamiques correspondant au compte d'identité utilisateur du programme d'application spécifié, **caractérisé en ce que**
avant que l'instruction dynamique ne soit générée, le procédé de traitement d'instructions dynamiques comprend, en outre:
lorsque la demande d'acquisition d'instructions dynamiques est reçue, la détermination si le compte d'identité utilisateur du programme d'application spécifié correspondant à la demande d'acquisition d'instructions dynamiques a la permission d'acquérir l'instruction dynamique; et
lorsque le résultat de la détermination est positif, la génération de l'instruction dynamique cible correspondant au compte d'identité utilisateur du programme d'application spécifié, et lorsque le résultat de la détermination est négatif, la non génération de l'instruction dynamique cible.

2. Procédé de traitement d'instructions dynamiques selon la revendication 1, dans lequel le système d'exploitation spécifié est un système d'exploitation ayant le niveau de sécurité le plus élevé parmi les systèmes d'exploitation multiples, le programme d'application spécifié comprenant un programme d'application de bureau mobile personnel, dans lequel une unité de génération dans l'appareil de traitement d'instructions dynamiques génère l'instruction dynamique cible et inclut une puce de génération d'instructions dynamiques, et la puce de génération d'instructions dynamiques n'est accessible que par le système d'exploitation ayant le niveau de sécurité le plus élevé parmi les systèmes d'exploitation multiples.

3. Appareil de traitement d'instructions dynamiques (200) utilisé pour un terminal, dans lequel le terminal comprend des systèmes d'exploitation multiples, et dans lequel l'appareil de traitement d'instructions dynamiques (200) comprend:
une unité de génération (202) utilisée, lorsqu'une demande d'acquisition d'instructions dynamiques envoyée par un programme d'application spécifié dans un système d'exploitation spécifié parmi les systèmes d'exploitation multiples est reçue, pour générer une instruction dynamique cible;
et une unité d'acquisition (204), utilisée pour acquérir l'instruction dynamique cible générée, et réaliser une opération d'authentification correspondante en utilisant l'instruction dynamique cible,
comprenant, en outre:
une unité d'invite (206) utilisée, lorsque le programme d'application spécifié dans le système d'exploitation spécifié est activé et que la connexion est réalisée par un compte d'identité utilisateur, pour inviter l'utilisateur du terminal à entrer l'instruction dynamique pour effectuer l'opération d'authentification correspondante, l'opération d'authentification correspondante étant une authentification de l'utilisateur du terminal; et
une unité d'envoi (208) utilisée, lorsque le terminal est détectée pour inviter l'utilisateur à entrer l'instruction dynamique, pour contrôler le système d'exploitation spécifié pour envoyer la demande d'acquisition d'instructions dynamiques correspondant au compte d'identité utilisateur du programme d'application spécifié à l'unité de génération (202), **caractérisé en ce que** l'appareil de traitement d'instructions dynamiques (200) comprenant, en outre:
une unité de détermination (210) utilisée, lorsque la demande d'acquisition d'instructions dynamiques est reçue, pour déterminer si le compte d'identité utilisateur du programme d'application spécifié correspondant à la demande d'acquisition d'instructions dynamiques a la permission d'acquérir l'instruction dynamique; et
l'unité de génération (202) est utilisée, en outre:
lorsque le résultat de la détermination est positif, pour générer l'instruction dynamique cible correspondant au compte d'identité utilisateur du programme d'application spécifié, et lorsque le résultat de la détermination est négatif, pour ne pas générer l'instruction dynamique cible.

4. Appareil de traitement d'instructions dynamiques (200) selon la revendication 3, dans lequel l'unité de génération (202) comprend une puce de génération d'instructions dynamiques, et dans lequel la puce de génération d'instructions dynamiques ne peut être accessible que par le système d'exploitation ayant le niveau de sécurité le plus élevé parmi les systèmes d'exploitation multiples.

5. Terminal comprenant:
des systèmes d'exploitation multiples; et
l'appareil de traitement d'instructions dynamiques (200) selon l'une quelconque des revendications 3 et 4.

6. Terminal selon la revendication 5, dans lequel le système d'exploitation spécifié est un système d'exploitation ayant le niveau de sécurité le plus élevé parmi les systèmes d'exploitation multiples, et dans lequel le programme d'application spécifié comprend un programme d'application de bureau mobile personnel.
